# EUROPEAN PATENT APPLICATION

(11) **EP 3 895 892 A1**
(43) Date of publication of application: **20.10.2021**
(21) Application number: 21168780.1
(22) Date of filing: 16.04.2021
(51) Int. Cl.: B32B 37/12, B32B 5/02, B32B 15/14, B32B 38/18

(54) **A METHOD AND A DEVICE FOR APPLYING FELT ONTO A METAL STRIP**

(30) Priority: 16.04.2020 PL 43355220
(71) Applicant: Stachlewski, Maciej, 95-083 Lutomiersk (PL)
(72) Inventor: Stachlewski, Maciej, 95-083 Lutomiersk (PL)
(74) Representative: Kancelaria Eupatent.pl Sp. z.o.o

(57) **Abstract**

A device for applying felt (2) onto a metal strip (1), the device comprising: a set of metal strip guiding and driving rollers (20) for guiding the metal strip (1); a set of felt guiding rollers (30) for guiding the felt (2); and a felt application assembly (40) for applying the felt (2) onto a surface of the metal strip (1). The felt application assembly (40) comprises: a gripping element (41) for holding the felt (1); a pressing beam (43) for initial pressing the felt (2) towards the metal strip (2); a pressing roller (42) for applying the felt (2) by pressing the felt (2) towards the surface of the metal strip (1); and a felt cutting mechanism located behind the pressing beam (43) in the feeding direction of the felt (2). The pressing roller (42) is located before the pressing beam (43) and before the gripping element (41) in the feeding direction of the felt (2) and is movable between its first position at which it is distanced from the surface of the metal strip (1) and its second position at which it is able to presses the felt (2) towards the surface of the metal strip (1). The gripping element (41) is movable independently of the pressing roller (42) between its first position at which it is distanced from the surface of the felt (2) and its second position at which it is able to grip the felt (2). The pressing beam (43) is movable independently of the pressing roller (42) and independently of the gripping element (41) between its first position at which it is distanced from the surface of the metal strip and its second position at which it is able to presses the felt towards the surface of the metal strip.

## Description

### TECHNICAL FIELD

The present invention relates to applying felt onto a metal strip.

### BACKGROUND

There are known various devices for manufacturing sheet metal covered with felt, wherein a layer of felt is applied onto a metal strip.

For example, EP1767340A1 discloses an apparatus for manufacturing felt coated metal sheeting, that comprises a sheet metal uncoiler, a felt applicator, roll formers, a guillotine, a transfer conveyor, a felt lap heat applicator and a stacking conveyor for finished product. The felt applicator comprises a mobile frame on which is mounted a cradle for supporting a roll of felt. The apparatus further comprises means for clamping one end of a formed and felt coated sheet to expose a short lap end and means for applying heat to the exposed lap end to melt the felt coat.

### SUMMARY

There is a need to provide an alternative method of forming metal coated with felt.

The present invention provides a method for applying felt onto a metal strip that enables discontinuous application of felt, such as to leave areas of the metal strip not covered with the felt.

The object of the invention is a device for applying felt onto a metal strip. The device comprises a set of metal strip guiding and driving rollers for guiding the metal strip; a set of felt guiding rollers for guiding the felt; and a felt application assembly for applying the felt onto a surface of the metal strip. The felt application assembly comprises a gripping element for holding the felt; a pressing beam for initial pressing the felt towards the metal strip; a pressing roller for applying the felt by pressing the felt towards the surface of the metal strip; and a felt cutting mechanism located behind the pressing beam in the feeding direction of the felt. The pressing roller is located before the pressing beam and before the gripping element in the feeding direction of the felt and is movable between its first position at which it is distanced from the surface of the metal strip and its second position at which it is able to presses the felt towards the surface of the metal strip. The gripping element is movable independently of the pressing roller between its first position at which it is distanced from the surface of the felt and its second position at which it is able to grip the felt. The pressing beam is movable independently of the pressing roller and independently of the gripping element between its first position at which it is distanced from the surface of the metal strip and its second position at which it is able to presses the felt towards the surface of the metal strip.

The gripping element may have a form of a bar with pointed pins.

The device may further comprise a retaining beam positioned above the pressing beam.

The retaining beam can be tiltable between an operating position and a tilted position facilitating an entry of the felt into the device.

The set of felt guiding rollers may comprise a winding roller for winding a film that is peeled off from the felt.

The winding roller can be adjacent to a roll of felt, wherein the axle of the winding roller is mounted slidably, in a direction away and towards the axle of the roll of felt.

Another object of the invention is a method for applying felt onto a metal strip by means of the device as described herein. The method comprises the following steps:
a) inputting the metal strip into the device;
b) prior to inputting the felt into the device, setting the pressing roller to its first position, setting the pressing beam to its first position and setting the gripping element to its second position;
c) inputting the felt and engaging the felt along its front edge by the gripping element;
d) moving the pressing beam to its second position to attach the front edge of the felt to the surface of the metal strip;
e) moving the gripping element to its first position to disengage the gripping element from the felt;
f) moving the pressing roller to its second position to press the felt towards the surface of the metal strip;
g) moving the pressing beam to its second position and initiating the application of the felt onto the metal strip by feeding the metal strip and allowing application of the felt onto the metal strip;
h) upon application of a desired length of the felt, moving the pressing roller to its first position, stopping the feeding of the metal strip, and subsequently moving the gripping element to its second position to engage the gripping element with the felt;
i) cutting off the felt behind the pressing beam;
j) feeding a desired length of the metal strip to leave a band not covered by the felt; and
k) applying a successive section of the felt onto the metal strip by repeating the steps (d) to (g).

The metal strip can be steel strip or strip of any other metal which is to be coated by felt.

Due to the use of the felt application assembly with the gripping element independent of the pressing roller, it is possible to periodically apply felt onto the surface of a metal strip or sheet, for example by gluing, with no need to reintroduce and tighten the strand of the felt in the device, which makes this process more efficient. It is therefore possible to apply the felt onto the metal with a "gap", so that when the metal strip is consequently cut into metal sheets, the felt is positioned at a certain distance from the edges of the sheet. Consequently, this allows manufacturing metal sheets coated with felt that is distanced from the edges of the sheet. Such felt-coated sheets can be used for example as a material for producing roof or wall coverings which are free of felt at the edges.

### BRIEF DESCRIPTION OF FIGURES

The object of the invention has been shown by means of an example embodiment in the drawing, where:
Fig. 1 presents a device in an isometric view;
Fig. 2 presents the device in a cross-section;
Fig. 3 presents a fragment of the device with a felt application assembly in the initial position;
Fig. 4A presents a fragment of the device with a pressing beam and a gripping element in the higher position;
Fig. 4B presents a fragment of the device with the gripping element in the lower position;
Fig. 4C presents a fragment of the device with a pressing roller in the higher position;
Fig. 5A presents a fragment of the device with the felt application assembly in the application position;
Fig. 5B presents a fragment of the device with indication of the directions of movement of the metal strip and the felt;
Fig. 6A presents a fragment of the device with the felt application assembly in a position enabling the felt to be cut off;
Fig. 6B presents a fragment of the device with a felt cutting mechanism in the cutting position;
Fig. 7 presents a fragment of the device with the felt application assembly in the initial position behind cutting off the felt;
Fig. 8 presents the gripping element in the form of a bar;
Fig. 9A presents an embodiment of the device with a tiltable retaining beam in the operating position;
Fig. 9B presents an embodiment of the device with the tiltable retaining beam in the raised position;
Fig. 10 presents a mechanism of the pressing beam;
Fig. 11 presents a mechanism of the pressing roller;
Fig. 12 presents the felt cutting mechanism.

### DETAILED DESCRIPTION OF AN EMBODIMENT

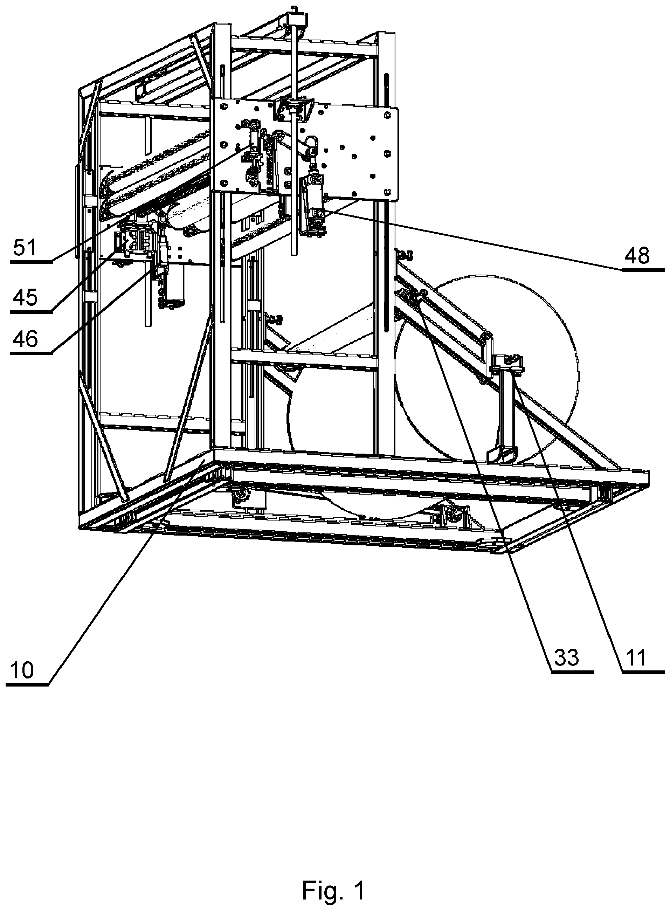

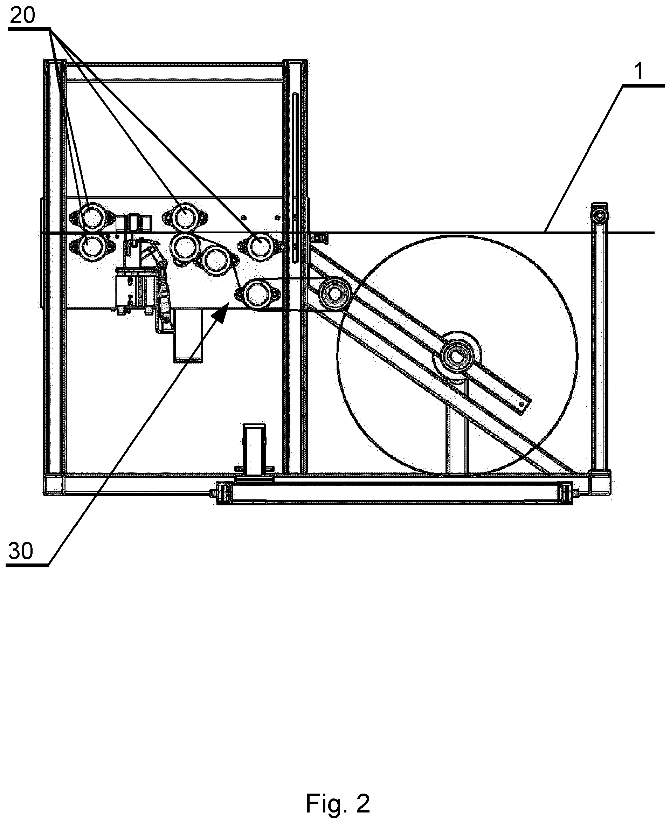

Fig. 1 presents a device for applying felt onto a metal strip in an isometric view. Fig. 2 presents the device for applying felt onto the metal strip in a cross-section. The device for applying felt onto the metal strip comprises a set of metal strip guiding and driving rollers 20 for guiding the metal strip 1, a set of felt guiding rollers 30 for guiding the felt 2 and a felt application assembly 40 for applying the felt 2 onto the surface of the metal strip 1. Preferably, the device comprises a frame 10, on which the set of metal strip guiding and driving rollers 20, the set of felt guiding rollers 30 and the felt application assembly 40 are seated. Preferably, the device comprises a slot 11 for placing a roll of felt.

Preferably, the set of felt guiding rollers 30 comprises a felt guiding roller 31 (this roller guides the felt from which a protective film 3 has already been peeled off), a felt guiding roller with the film 32 and a winding roller 33 for winding the film 3 peeled off from the felt 2. The winding roller 33 is driven by means of the roll of felt due to its rotation, wherein the axle of the winding roller 33 is mounted slidably, in a direction away/towards the axle of the roll of felt, due to which it remains tangent to the roll of felt as its diameter changes.

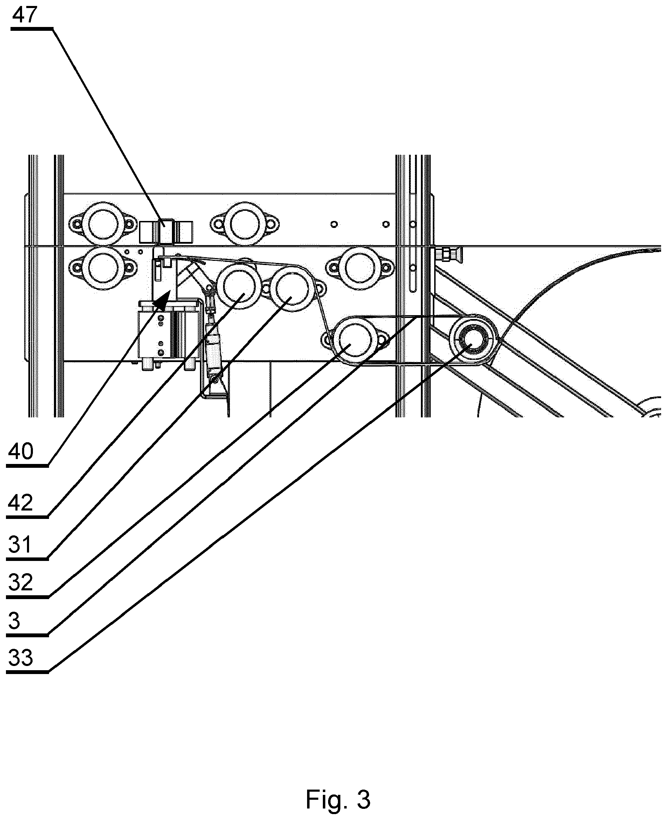

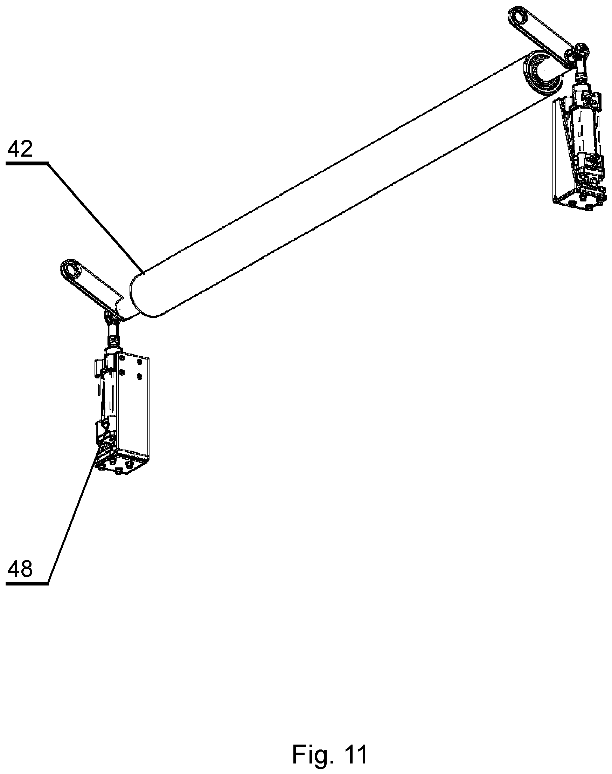

Figs. 3-7 present details of the felt application assembly. The felt application assembly 40 comprises a gripping element 41 for holding the felt 2, a pressing beam 43 for initial pressing the front edge of the felt 2 towards the metal strip 1, and a pressing roller 42 (which can also be called an applicator roller) for applying the felt by pressing the felt 2 towards the surface of the metal strip 1. Wherein the pressing roller 42 is located before the gripping element 41 and before the pressing beam 43 in the feeding direction of the felt, and it is movable between a lower position distanced from the surface of metal strip and an higher position of felt application, in which it presses the felt towards the surface of the metal strip. Preferably, the pressing roller 42 is controlled by means of actuators 48. The mechanism of the pressing roller 42 along with its control actuators 48 is shown in Fig. 11.

Moreover, the gripping element 41 is movable independently of the pressing roller 42 and of the pressing beam 43 between a lower position distanced from the surface of the felt and an higher position in which it at least engages the felt (or even pierces the felt) in order to grip it. Preferably, the gripping element 41 is controlled by means of actuators 46, while the pressing beam 43 is controlled by means of actuators 45.

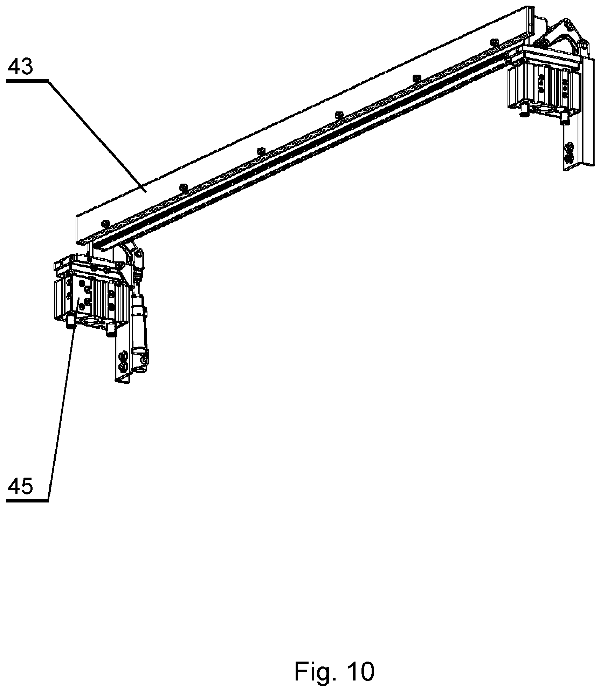

The mechanism of the pressing beam 43 along with its control actuators 45 is shown in Fig. 10.

Above the pressing beam 43, there is a retaining beam 47 which prevents excessive bending of the metal strip when pressing the felt towards the metal strip by the pressing beam 43.

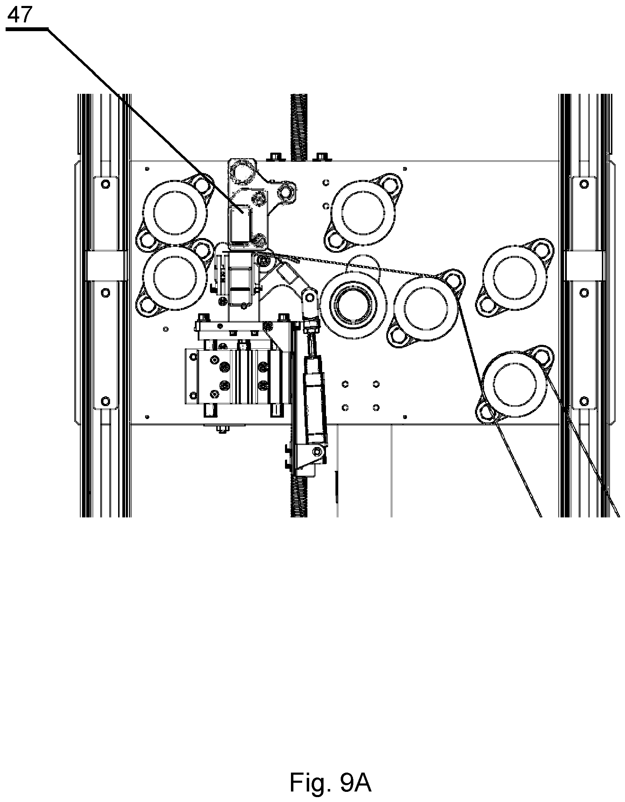

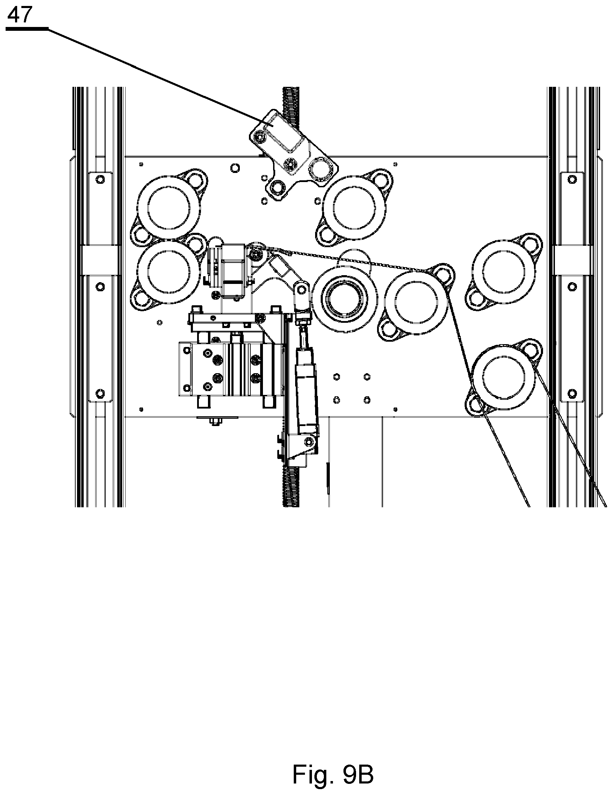

Preferably, the retaining beam 47 is tiltable between an operating position, in which its surface is parallel to the guiding surface of the metal strip, and a tilted higher position allowing easier entry of the felt into the device. Fig. 9A presents an embodiment of the device with the tiltable retaining beam in the operating position, while Fig. 9B presents an embodiment of the device with the tiltable retaining beam in the raised position.

The felt 2 comprises a layer of glue which is initially protected by the protective film 3. The layer of glue allows gluing the felt 2 to the metal strip 1.

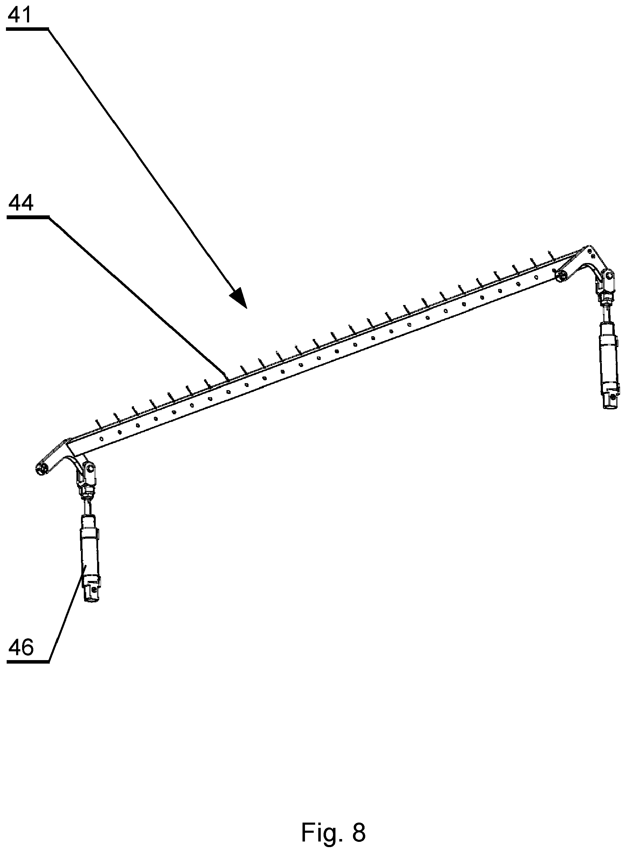

Preferably, the gripping element 41 has the form of a bar (shown in Fig. 8) with pointed pins 44 (e.g. in the form of spikes), which are engaged by the felt along its cut off edge, making it possible to maintain a tight strand of the felt 2 in a position distanced from the guiding line of the metal strip 1.

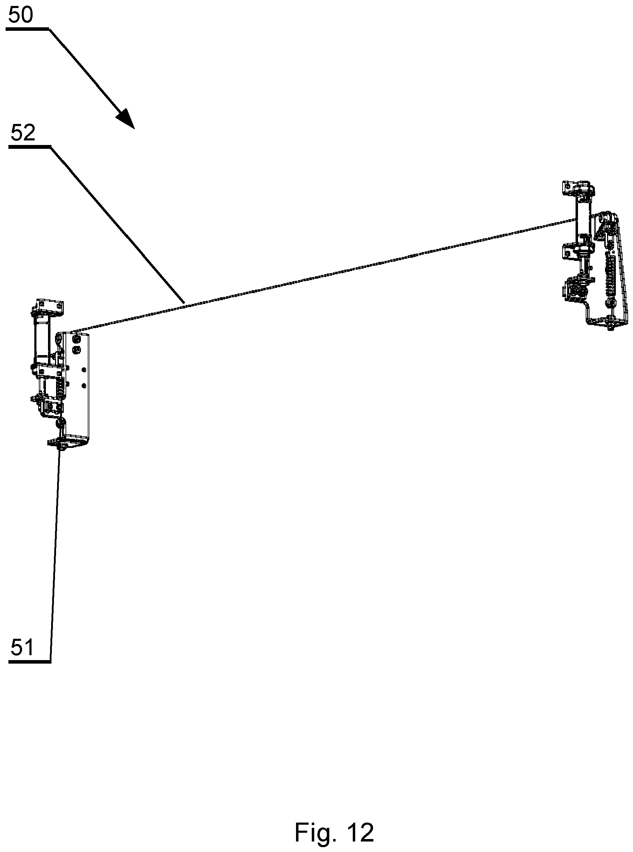

The device further comprises a felt cutting mechanism 50 located behind the pressing beam 43 in the feeding direction of the felt, which preferably has a form of resistance wire 52 mounted transverse to the feeding direction of the felt and movable between an initial position and a cutting position, in which the wire cuts the strand of felt behind the pressing beam 43. Preferably, the felt cutting mechanism is controlled by means of actuators 51. The felt cutting mechanism 50 along with its control actuators 51 is shown in Fig. 12.

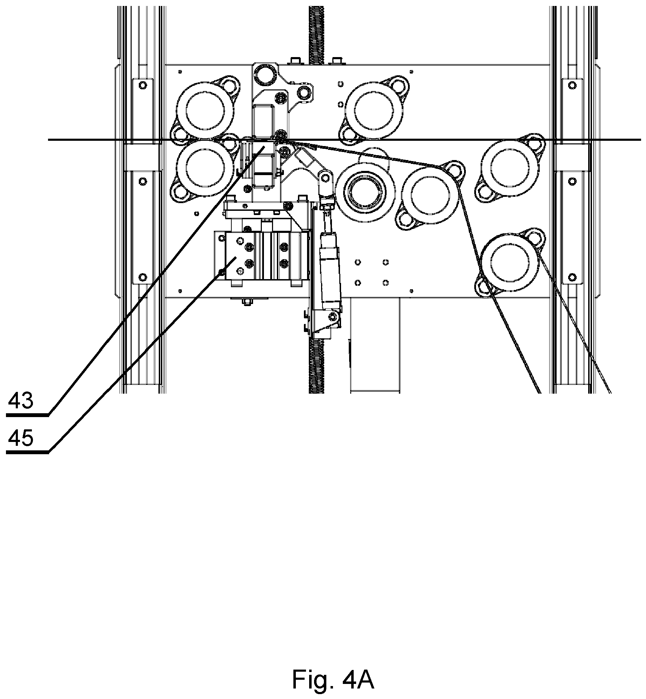

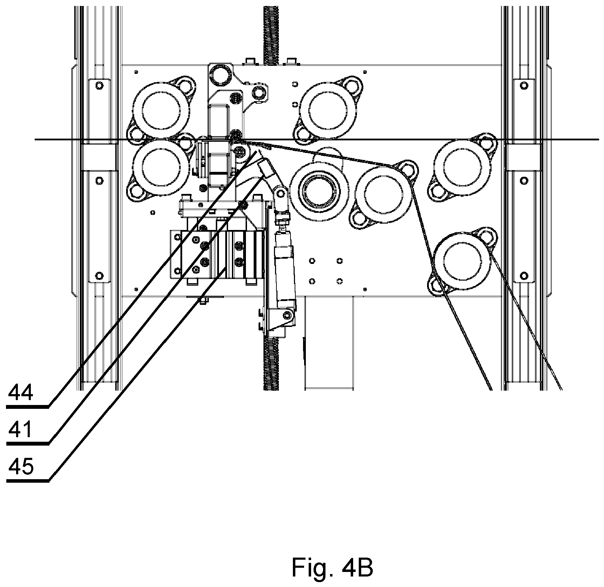

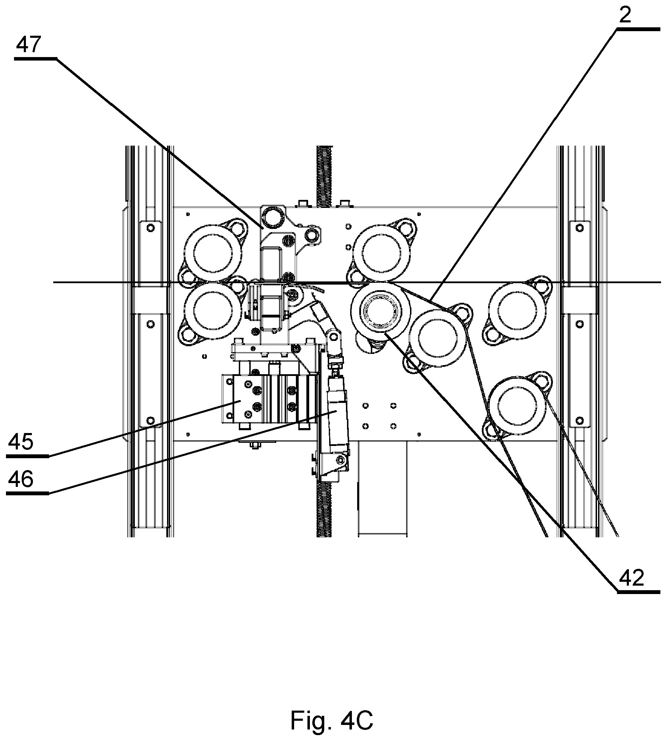

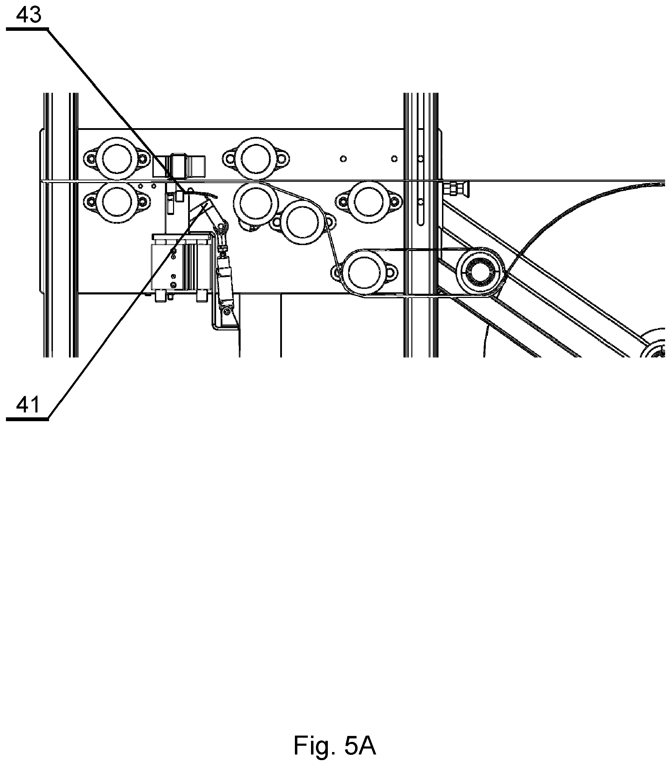

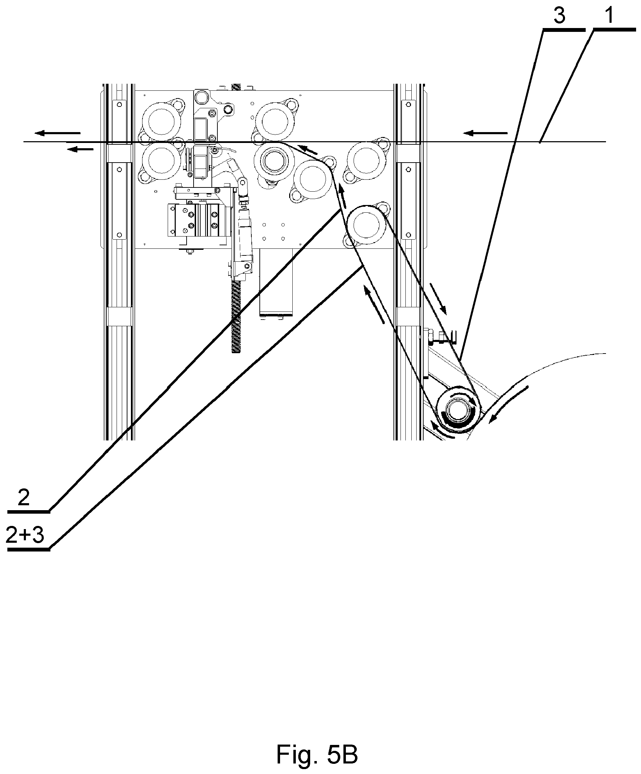

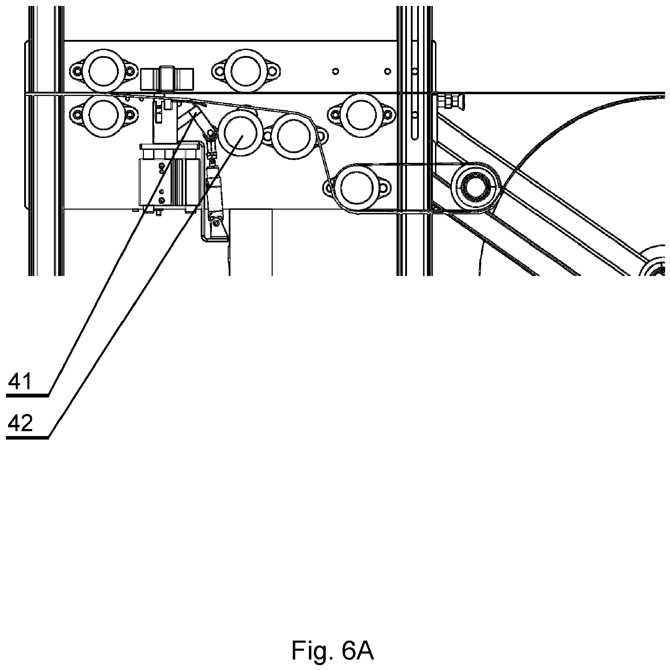

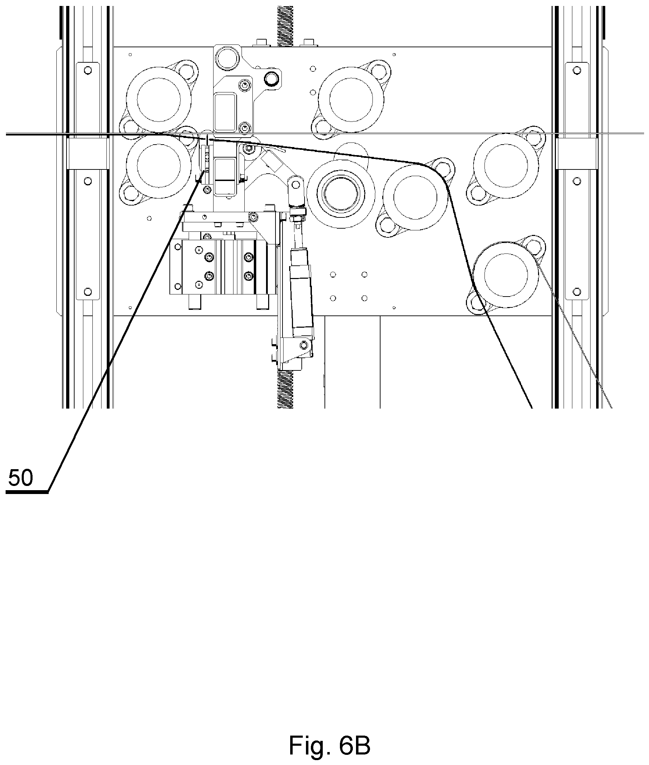

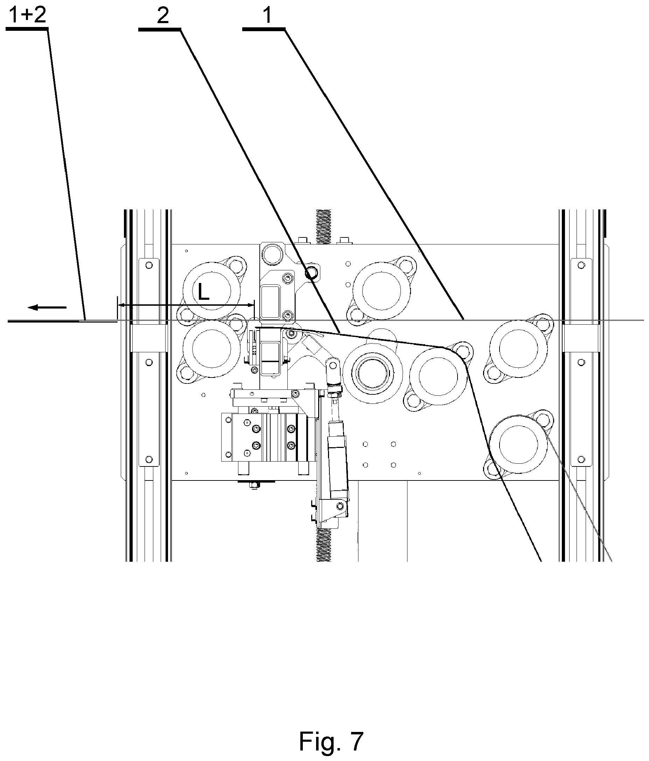

The following steps are performed in order to apply felt onto the metal strip:
a) inputting the metal strip 1 into the device;
b) before inputting the felt into the device, setting the pressing roller 42 and the pressing beam 43 to a position distanced from the surface of the metal strip 1, setting the gripping element 41 to an higher position, and preferably raising the retaining beam 47,
c) inputting the felt 2 and at least engaging it (or even piercing) along the front edge by the gripping element 41 (Fig. 3), and preferably lowering the retaining beam 47,
d) raising the pressing beam 43 to a position in which it presses the felt towards the surface of the metal strip (Fig. 4A),
e) lowering the gripping element 41 to a lower position, in which the pins are retracted from the felt (Fig. 4B),
f) raising the pressing roller 42 to the application position of the felt, in which it presses the felt towards the surface of the metal strip (Fig. 4C),
g) lowering the pressing beam 43 and initiating the application of the felt 2 onto the metal strip 1 by their joint guiding (Fig. 5A, 5B), wherein the start of the movement of the metal strip causes the unwinding of the felt off the roll, and thus causes rotation of the roll of felt, which in turn causes the rotation of the winding roller 33, around which the protective film 3 is being wound. The winding roller 33 is adjacent to the roll of felt and it moves towards the roll along with a decrease in the diameter of the roll caused by the unwinding of the felt therefrom;
h) subsequently, in order to grip the felt again, lowering the pressing roller 42 to a position distanced from the surface of the metal strip, stopping the movement of the metal strip, and subsequently raising the gripping element 41 to a position in which the pins puncture the felt, causing it to at least be engaged by the gripping element 41 (Fig. 6A) (or even pierced by the gripping element 41),
i) cutting off the felt 2 behind the pressing beam 43 (Fig. 6B),
j) moving the metal strip by a predetermined distance in order to leave a band, e.g. having a length L, not covered by the felt (Fig. 7);
k) in order to continue applying the felt onto the metal strip, repeating the steps from d) to g).

## Claims

1. A device for applying felt (2) onto a metal strip (1), the device comprising:
- a set of metal strip guiding and driving rollers (20) for guiding the metal strip (1);
- a set of felt guiding rollers (30) for guiding the felt (2); and
- a felt application assembly (40) for applying the felt (2) onto a surface of the metal strip (1), wherein the felt application assembly (40) comprises:
- a gripping element (41) for holding the felt (1);
- a pressing beam (43) for initial pressing the felt (2) towards the metal strip (2);
- a pressing roller (42) for applying the felt (2) by pressing the felt (2) towards the surface of the metal strip (1); and
- a felt cutting mechanism located behind the pressing beam (43) in the feeding direction of the felt (2),
**characterised in that**:
- the pressing roller (42) is located before the pressing beam (43) and before the gripping element (41) in the feeding direction of the felt (2) and is movable between its first position at which it is distanced from the surface of the metal strip (1) and its second position at which it is able to presses the felt (2) towards the surface of the metal strip (1);
- wherein the gripping element (41) is movable independently of the pressing roller (42) between its first position at which it is distanced from the surface of the felt (2) and its second position at which it is able to grip the felt (2); and
- wherein the pressing beam (43) is movable independently of the pressing roller (42) and independently of the gripping element (41) between its first position at which it is distanced from the surface of the metal strip and its second position at which it is able to presses the felt towards the surface of the metal strip.

2. The device according to claim 1, wherein the gripping element (41) has a form of a bar with pointed pins (44).

3. The device according to any of previous claims, further comprising a retaining beam (47) positioned above the pressing beam (43).

4. The device according to claim 3, wherein the retaining beam (47) is tiltable between an operating position and a tilted position facilitating an entry of the felt into the device.

5. The device according to any of previous claims, wherein the set of felt guiding rollers (30) comprises a winding roller (33) for winding a film (3) that is peeled off from the felt (2).

6. The device according to claim 5, wherein the winding roller (33) is adjacent to a roll of felt (2), wherein the axle of the winding roller (33) is mounted slidably, in a direction away and towards the axle of the roll of felt (2).

7. A method for applying felt onto a metal strip by means of the device according to any of previous claims, the method comprising the following steps:
a) inputting the metal strip (1) into the device;
b) prior to inputting the felt (2) into the device, setting the pressing roller (42) to its first position, setting the pressing beam (43) to its first position and setting the gripping element (41) to its second position;
c) inputting the felt (2) and engaging the felt (2) along its front edge by the gripping element (41);
d) moving the pressing beam (43) to its second position to attach the front edge of the felt (2) to the surface of the metal strip;
e) moving the gripping element (41) to its first position to disengage the gripping element (41) from the felt (2);
f) moving the pressing roller (42) to its second position to press the felt (2) towards the surface of the metal strip (1);
g) moving the pressing beam (43) to its second position and initiating the application of the felt (2) onto the metal strip (1) by feeding the metal strip (1) and allowing application of the felt (2) onto the metal strip (1);
h) upon application of a desired length of the felt (2), moving the pressing roller (42) to its first position, stopping the feeding of the metal strip (1), and subsequently moving the gripping element (41) to its second position to engage the gripping element (41) with the felt (2);
i) cutting off the felt (2) behind the pressing beam (43);
j) feeding a desired length of the metal strip (1) to leave a band not covered by the felt (2); and
k) applying a successive section of the felt (2) onto the metal strip (1) by repeating the steps (d) to (g).
